# EUROPÄISCHE PATENTSCHRIFT

(11) **EP 1 352 805 B1**
(45) Veröffentlichungstag und Bekanntmachung des Hinweises auf die Patenterteilung: **07.06.2006**
(21) Anmeldenummer: 03004699.9
(22) Anmeldetag: 04.03.2003
(51) Int. Cl.: B62D 1/11

(54) **Lenkrad-Skelett eines Fahrzeug-Lenkrads**
Internal structure of a vehicle steering wheel
Armature de volant

(30) Priorität: 10.04.2002 DE 10215684
(43) Veröffentlichungstag der Anmeldung: 15.10.2003
(73) Patentinhaber: Bayerische Motoren Werke Aktiengesellschaft, 80809 München (DE)
(72) Erfinder: Ertlmaier, Stephan, 85737 Ismaning (DE); Mieslinger, Friedrich, 84034 Landshut (DE); Schmid, Peter, 81669 München (DE)

(56) Entgegenhaltungen:
- EP-A- 0 825 090
- DE-B- 1 159 287
- PATENT ABSTRACTS OF JAPAN vol. 2000, no. 13, 5. Februar 2001 (2001-02-05) & JP 2000 296778 A (TOYOTA MOTOR CORP), 24. Oktober 2000 (2000-10-24)
- PATENT ABSTRACTS OF JAPAN vol. 1996, no. 04, 30. April 1996 (1996-04-30) & JP 07 323845 A (TOKYO SEAT KK), 12. Dezember 1995 (1995-12-12)
- PATENT ABSTRACTS OF JAPAN vol. 1996, no. 09, 30. September 1996 (1996-09-30) & JP 08 133093 A (TOYODA GOSEI CO LTD), 28. Mai 1996 (1996-05-28)
- PATENT ABSTRACTS OF JAPAN vol. 1996, no. 08, 30. August 1996 (1996-08-30) & JP 08 104239 A (SUZUKI MOTOR CORP), 23. April 1996 (1996-04-23)
- PATENT ABSTRACTS OF JAPAN vol. 1996, no. 02, 29. Februar 1996 (1996-02-29) & JP 07 257394 A (NIPPON PLAST CO LTD), 9. Oktober 1995 (1995-10-09)

## Beschreibung

Die Erfindung betrifft ein Lenkrad-Skelett eines Fahrzeug-Lenkrads mit einer Nabe, zumindest einer davon abgehenden Speiche sowie einem Lenkrad-Kranz, und insbesondere ein Lenkrad-Skelett, bei dem die Speiche(n) und/oder der Kranz einen durch seitliche Schenkel sowie einen Basis-Schenkel gebildeten, im wesentlichen U-förmigen Querschnitt besitzt/besitzen. Zum technischen Umfeld wird lediglich beispielshalber auf die DE 196 32 317 C1 verwiesen. Das Dokument DE 1159287131-das als nähester Stand der Technik angesehen wird, offenbart die Merkmale des Oberbegriffes aus Anspruch 1.

Ein Lenkrad-Skelett, auf das anschließend eine geeignete Umhüllung aufgebracht wird, wird derzeit primär danach ausgelegt, im Falle eines Fahrzeug-Crashs ein günstiges Verformungsverhalten aufzuweisen, um eine unfallbedingte, kritisch hohe Krafteinwirkung auf den Fahrer bzw. FahrzeugInsassen zu vermeiden. Im Hinblick hierauf wird das Lenkrad-Skelett zumeist gezielt weich bzw. leicht deformierbar ausgelegt. Zur Erreichung guter sog. Insassenschutzwerte ist ein besonders gutes Deformationsverhalten im Brust- bzw. Bauch-Aufschlagbereich des Fahrers erwünscht.

Eine weitere Randbedingung, die es bei der Auslegung bzw. der Gestaltung eines Fzg.-Lenkrads zu beachten gilt, ist eine gewisse Mindeststeifigkeit des Lenkrad-Skeletts im Hinblick auf ein komfortables Schwingungsverhalten des Lenkrads. Dabei sollen sowohl die durch das Fzg.-Antriebsaggregat angeregten Schwingungen als auch die durch die Fahrbahn angeregten Schwingungen (des Lenkrads) auf einem möglichst niedrigem Niveau gehalten werden. Dies erfordert eine relativ hohe Lenkrad-Steifigkeit zur Erzielung einer guten Eigenfrequenz des schwingungsfähigen Lenksystems im Fahrzeug, wobei zusätzlich bzw. insbesondere auch das Massenträgheitsmoment des Lenkrads geeignet abzustimmen ist.

Es liegt somit ein Zielkonflikt vor, denn einerseits soll ein Fzg.-Lenkrad leicht deformierbar und somit relativ weich, andererseits jedoch auch steif ausgeführt sein, wobei dieser Zielkonflikt umso größer ist, je größer das Massenträgheitsmoment bzw. die Masse im Lenkradkranz ist und je niedriger der Elastizitätsmodul des für das Lenkrad-Skelett verwendeten Materials ist.

Ein im Hinblick auf diese einander entgegengesetzten Anforderungen nach Crashsicherheit einerseits und Schwingungskomfort andererseits verbessertes Lenkrad-Skelett nach dem Oberbegriff des Anspruchs 1 aufzuzeigen, ist daher Aufgabe der vorliegenden Erfindung.

Die Lösung dieser Aufgabe ist allgemein dadurch gekennzeichnet, dass über der Länge der Speiche oder dem Umfang des Kranzes betrachtet Bereiche vorgesehen sind, die sich durch relativ hohe Steifigkeit auszeichnen und dass diesen Bereichen benachbart zumindest ein Abschnitt vorgesehen ist, der gegenüber den Bereichen mit hoher Steifigkeit leichter deformierbar ist.

Bei einem Lenkrad nach einer bevorzugten Ausführungsform der Erfindung, bei welchem die Speiche(n) und/oder der Kranz einen durch seitliche Schenkel sowie einen Basis-Schenkel gebildeten, im wesentlichen U-förmigen Querschnitt besitzt/besitzen, ist die Lösung der genannten Aufgabe dadurch gekennzeichnet, dass über der Länge der Speiche oder dem Umfang des Kranzes betrachtet zumindest einer der Schenkel zumindest einen Abschnitt mit einer gegenüber einem anderen Abschnitt zumindest teilweise verringerten Wandstärke aufweist.

Vorteilhafte Aus- und Weiterbildungen sind Inhalt der weiteren Unteransprüche.

Erfindungsgemäß sind im Lenkradkranz und/oder in der oder den Speiche(n) des Lenkrads unterschiedliche sog. Abschnitte vorgesehen, denen quasi jeweils eine spezielle Funktion zugeordnet ist. Dabei kann insbesondere das Profil oder der Querschnitt des jeweiligen Abschnittes seiner zugeordneten Funktion entsprechend gestaltet sein, daneben ist es aber auch grundsätzlich denkbar, unterschiedliche Werkstoffe in den einzelnen Abschnitten einer Speiche oder des Kranzes vorzusehen. Was die speziellen Funktionen der unterschiedlichen Abschnitte betrifft, so soll mit bzw. in einer ersten Menge von Abschnitten oder Bereichen eine relativ hohe Steifigkeit erzeugt werden, woraus eine relativ hohe Eigenfrequenz und somit ein guter Schwingungskomfort des Lenkrads resultiert. In zumindest einem, bevorzugt jedoch mehreren anderen, den erstgenanten Abschnitten oder Bereichen benachbarten Bereichen oder Abschnitten des Lenkradkranzes und/oder zumindest einer Speiche soll eindeutig ein relativ hohes Deformationsvermögen vorliegen, d.h. gezielt in diesem oder diesen anderen Bereich(en) oder Abschnitt(en) wird für einen Crash-Belastungsfall eine gezielte örtliche Nachgiebigkeit erreicht.

Dabei sei auf zwei wesentliche Aspekte hingewiesen: Zum einen sind diese verschiedenen Abschnitte oder Bereiche an ein und demselben Element des Lenkrads vorgesehen, d.h. liegen nebeneinander in der Lenkradspeiche und/oder im Lenkradkranz; d.h. dass die Speiche in Relation zum Lenkradkranz keine erfindungsgemäßen unterschiedlichen Abschnitte darstellen. Zum anderen sind diese erfindungsgemäßen unterschiedlichen Abschnitte oder Bereiche innerhalb einer Speiche oder des Kranzes für sich jeweils ziemlich eindeutig ausgebildet, d.h. es liegt kein langer, fließender Übergang zwischen diesen unterschiedlichen Bereichen oder Abschnitten vor. Vielmehr besteht quasi ein sprunghafter Übergang zwischen einem ersten, sich durch relativ hohe Steifigkeit auszeichnenden Abschnitt und einem diesen benachbarten zweiten Abschnitt, der relativ gut deformierbar ist.

Eine relativ gute Deformierbarkeit kann dabei durch unterschiedlichste Maßnahmen gewährleistet sein, so bspw. durch Variation der Wandstärke(n), durch Einbringen bzw. Vorsehen von Soll-Knickstellen oder SollBruchstellen oder Soll-Beulstellen, oder durch eine gezielte Änderung des jeweiligen individuellen Biegewiderstandsmomentes gegenüber dem benachbarten, sich durch eine relativ hohe Steifigkeit auszeichnenden Abschnitt oder Bereich der Speiche oder des Lenkrads. All diese soweit vorgeschlagenen Maßnahmen können dabei an den ansonsten üblichen Lenkrad-Skeletten umgesetzt werden, bspw. an in Vollguss (bspw. aus Magnesium oder Aluminium) ausgeführten Skeletten mit oder ohne Einleger (bspw. aus Stahl oder Aluminium), insbesondere im Kranzbereich zur Abstimmung des Massenträgheitsmomentes. Umgesetzt werden können diese Maßnahmen aber auch an Lenkrädern mit Verbundguss-Skeletten, bei denen üblicherweise die Nabe in Guss (Mg oder Al) ausgeführt ist, und die mit umgeformten oder flachen aus Stahl- oder Aluminium-Blech gestanzten Speichen ausgestattet sind, wobei geeignete Verbindungselemente vorgesehen sind, ggf. auch zum an die Speichen angebundenen Lenkradkranz, der bspw. aus einem Aluminium-Rohr oder Stahlrohr gefertigt sein oder in Vollmaterial ausgeführt sein kann. Daneben sind weitere bekannte Bauweisen und Umformtechniken für die betroffenen Elemente eines erfindungsgemäßen Lenkrad-Skeletts möglich, so neben Blechprofilen auch Strangpressprofile (insbesondere in Al ausgeführt) und weiteres mehr.

Wie weiter oben bereits angegeben wurde, kann bei Vorsehen eines im wesentlichen U-förmigen Querschnitts für die Speiche(n) und/oder den Lenkrad-Kranz ein leichter deformierbarer Abschnitt einfach durch eine Verringerung der Wandstärke an zumindest einem der Schenkel des U-förmigen Querschnitts geschaffen werden. Dabei ist der verwendete Begriff der zumindest teilweise verringerten Wandstärke sehr allgemein oder umfassend zu verstehen. So kann die Fläche bzw. Höhe des oder der Schenkel(s) im leichter deformierbaren Bereich ebenso groß sein wie die Fläche oder Höhe des oder der Schenkel im benachbarten, eine höhere Steifigkeit aufweisenden Bereich und es kann sich lediglich die Dicke der Schenkel-Wand über den gesamten Flächenabschnitten oder auch nur Teilen derselben zwischen diesen beiden Bereichen bzw. Abschnitten unterscheiden. Unter den Begriff der zumindest teilweise verringerten Wandstärke soll jedoch auch eine solche Gestaltung fallen, bei welcher ein Schenkel im leichter deformierbaren Bereich oder Abschnitt kürzer als ein Schenkel im benachbarten, eine höhere Steifigkeit besitzenden Bereich oder Abschnitt ist.

Im Hinblick auf eine gewünschte gute Deformierbarkeit besonders wirksam ist eine Schwächung durch eine verringerte Wandstärke in einem Abschnitt eines Profils (hier Speiche oder Kranz) mit im wesentlichen U-förmigen Querschnitt, wenn die beiden einander gegenüberliegenden Schenkel dieses Profils jeweils einander gegenüberliegende Abschnitte mit zumindest teilweise verringerter Wandstärke (in Relation zu benachbarten Abschnitten) aufweisen. Dabei können nicht nur die seitlichen Schenkel in den deformierbaren Abschnitten oder Bereichen gegenüber den diesen benachbarten Abschnitten oder Bereichen geschwächt sein, sondern es kann auch der zwischen den seitlichen Schenkeln liegende sog. Basis-Schenkel insbesondere in einem bzw. demjenigen Querschnitt, in dem der oder die seitlichen Schenkel eine zumindest teilweise verringerte Wandstärke aufweist oder aufweisen, ebenfalls eine gegenüber einem benachbarten Querschnitt oder Abschnitt zumindest teilweise verringerte Wandstärke aufweisen.

Im Sinne einer vorteilhaften Weiterbildung kann die besagte teilweise verringerte Wandstärke eines Abschnitts in Form einer Aussparung oder eines Durchbruchs ausgebildet sein. Dabei kann sich - wie bereits erwähnt wurde - die Aussparung quasi am freien Ende eines Schenkels befinden, so dass dieser Schenkel im besagten Abschnitt kürzer ist als der Schenkel eines benachbarten Abschnitts. Daneben kann die genannte Aussparung auch als Sollbruchstelle fungieren und hierfür geeignet ausgebildet sein, so bspw. in Form einer Einkerbung oder dgl.. Insbesondere dann kann im Schenkel zwischen dieser Aussparung und dem sog. Basis-Schenkel ein sog. Riss-Stopper in Form eines Durchbruchs oder dgl. vorgesehen sein. Dieser Riss-Stopper lenkt eine Rissbildung bei einer gewünschten Deformation des hierfür vorgesehenen Abschnitts des Lenkrad-Skeletts definiert von der Einkerbung oder Sollbruchstelle zum genannten Durchbruch hin, so dass gewährleistet ist, dass die gewünschte Deformation tatsächlich wie gewünscht stattfindet, wenn das Lenkrad bzw. das Lenkrad-Skelett im Falle eines Fzg.-Crashs durch den Fahrer entsprechend belastet wird bzw. entsprechend auf den Fahrer auftrifft.

Wenn - wie weiterhin vorgeschlagen - bei einer Speiche der oder die Abschnitt(e) mit zumindest teilweise verringerter Wandstärke näher an der Nabe als am Kranz vorgesehen sind, so kann der Abschnitt oder Bereich mit der höheren Steifigkeit näher am Lenkrad-Kranz und somit in Radialrichtung weiter außen angeordnet werden. Dies bringt Vorteile insbesondere hinsichtlich des Schwingungsverhaltens des Lenkrads.

Wenn - wie weiterhin vorgeschlagen - der oder die Schenkel in einem Abschnitt mit teilweise verringerter Wandstärke gegenüber den benachbarten Abschnitten nach außen oder innen gewölbt sind, so ist bereits eine bestimmte Ausbeulrichtung vorgegeben, in die sich bei entsprechender Krafteinleitung der zur Deformation vorgesehene Abschnitt verformen kann.

Im folgenden wird die Erfindung anhand mehrerer, lediglich prinzipiell und daher stark vereinfacht dargestellter bevorzugter Ausführungsbeispiele weiter erläutert, wobei jeweils nur Ausschnitte eines erfindungsgemäßen Lenkrad-Skeletts dargestellt sind, dessen Speiche(n) und/oder Kranz einen im wesentlichen U-förmigen Querschnitt besitzt. Im einzelnen zeigt:
- **Figur 1A**: einen Halbschnitt durch ein erstes Ausführungsbeispiel eines erfindungsgemäßen Lenkrad-Skeletts
- **Figur 1B**: die Ansicht U aus Fig.1a
- **Figur 1C**: den Schnitt A-A aus Fig.1A im nicht deformierten sowie im deformierten Zustand
- **Figur 2A**: die Ansicht von unten (ähnlich Fig.1B) auf das im Querschnitt U-förmige Profil einer Speiche oder des Kranzes eines zweiten Ausführungsbeispiels
- **Figur 2B**: den Schnitt A-A aus Fig.2A
- **Figur 2C**: den Schnitt B-B aus Fig.2A in einer ersten Ausführungsform
- **Figur 2D**: den Schnitt B-B aus Fig.2A in einer zweiten Ausführungsform
- **Figur 2E**: die Ansicht auf einen Teil einer Speiche (oder eines Kranzes) mit einem Profil-Querschnitt entsprechend Fig.2A, der durch eine eine Deformation auslösende Kraft F₁ belastet wird
- **Figur 2F**: eine der Figur 2A entsprechende Ansicht der gemäß Fig.2E belasteten Speiche (oder des Lenkrad-Kranzes)
- **Figur 2G**: einen Längsschnitt (entsprechend dem Schnitt A-A aus Fig.2F) durch das Skelett einer Speiche (oder eines Kranzes) mit einem Profil-Querschnitt entsprechend Fig.2A, die oder der durch eine eine Deformation auslösende Kraft F₂ belastet wird
- **Figur 3A**: eine Seitenansicht einer Speiche (ähnlich der Ansicht in Fig.1A) in einer dritten Ausführungsform der vorliegenden Erfindung
- **Figur 3B**: den Schnitt A-A aus Fig.3A
- **Figur 3C**: eine Ausführungsvariante zur Gestaltung nach Fig.3A
- **Figur 3D**: die Ausführungsform nach Fig.3C im Falle einer eine Deformation auslösenden Belastung durch eine Kraft F

Dabei sind in sämtlichen Figuren gleiche Elemente mit den gleichen Bezugsziffern versehen und erfindungswesentlich können alle näher erläuterten Merkmale sein.

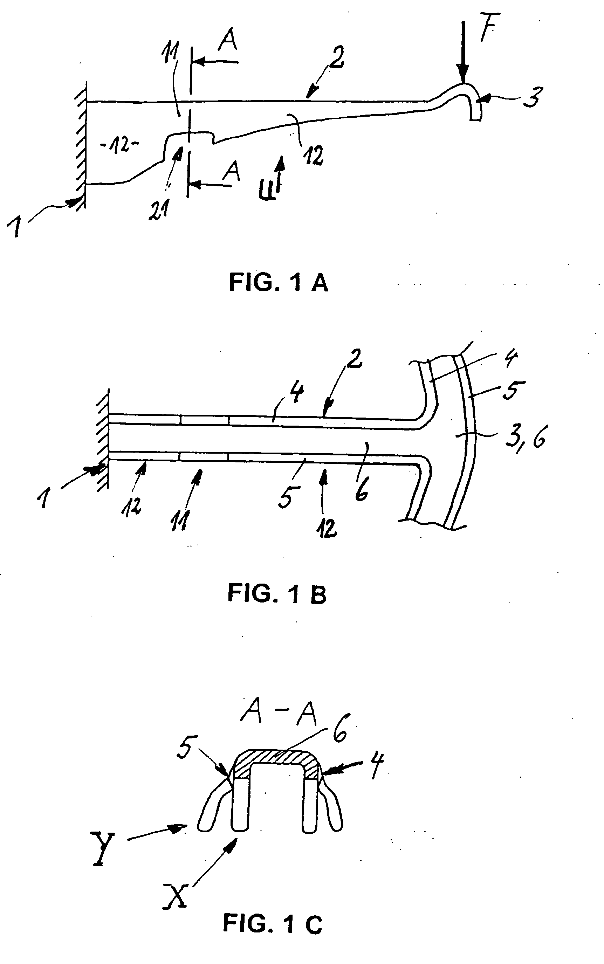

Zunächst Bezug nehmend auf **Fig.1A** ist mit der Bezugsziffer 1 die Nabe eines Fzg.-Lenkrads bzw. Skeletts desselben bezeichnet, an die eine Speiche 2 angebunden ist, die - wie allgemein üblich - einen Lenkrad-Kranz 3 trägt. Insofern handelt es sich um einen allgemein üblichen Aufbau eines Lenkrad-Skeletts, dessen Kranz 3 und/oder zumindest eine Speiche 2 aus einem im Querschnitt im wesentlichen U-förmigen Profil besteht, wie aus den weiteren Figuren **(Fig.1B, Fig.1C, Fig.2B, Fig.3B** und andere) hervorgeht. Dabei ist dieses im Querschnitt im wesentlichen U-förmige Profil durch zwei seitliche Schenkel 4, 5 sowie einen zwischen diesen liegenden bzw. diese miteinander verbindenden sog. Basis-Schenkel 6 gebildet.

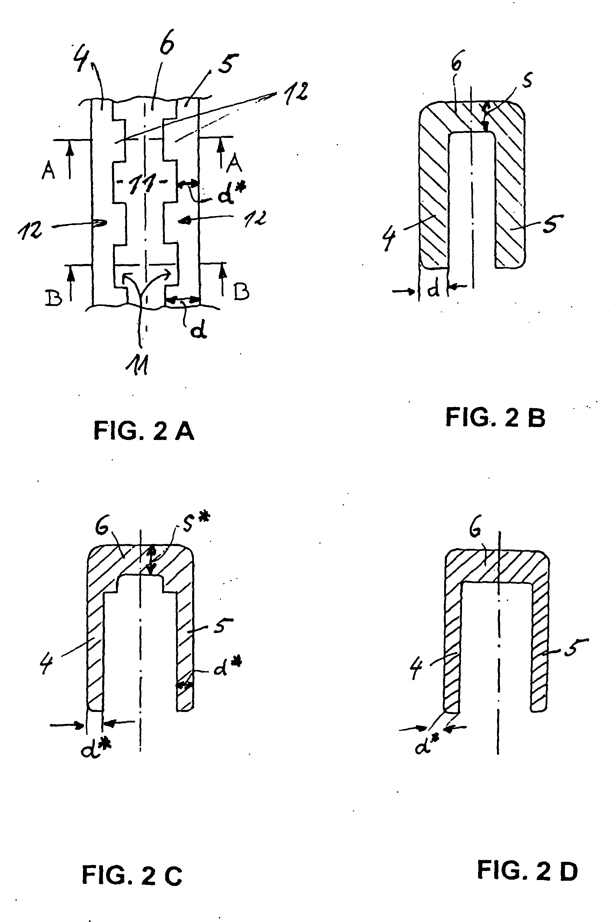

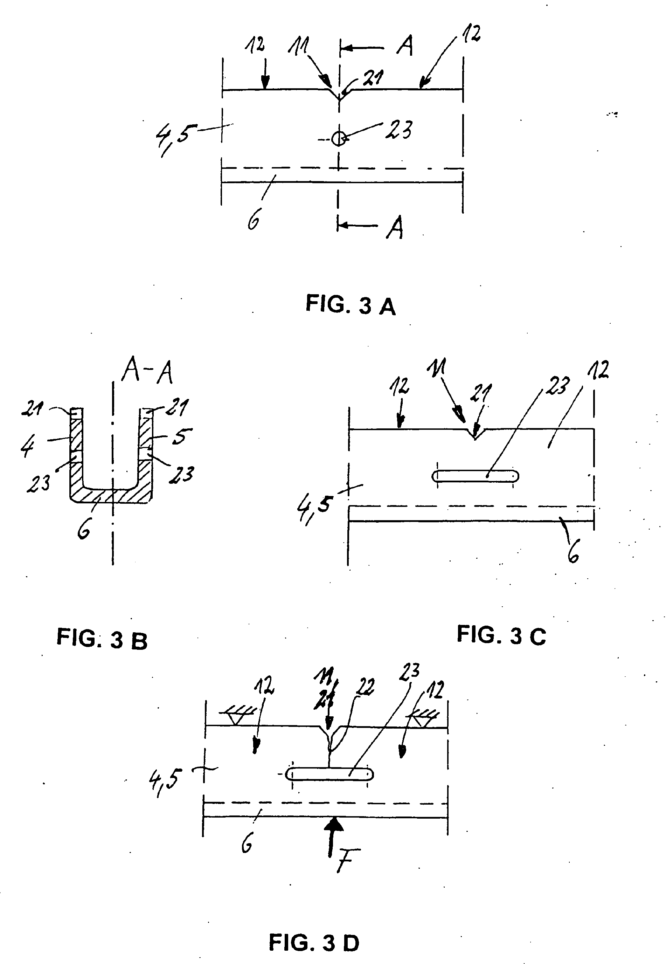

Bei sämtlichen in den Figuren-Folgen **1 = (Fig.1A, 1B, 1C), 2 = (Fig.2A, 2B, 2C, ...), 3 = (Fig.3A, 3B, 3C, 3D)** dargestellten Ausführungsbeispielen weist nun über der Länge der Speiche 2 oder dem Umfang des Lenkrad-Kranzes 3 betrachtet zumindest einer der seitlichen Schenkel 4, 5 des im wesentlichen U-förmigen Profils einen Abschnitt 11 auf, der gegenüber einem anderen Abschnitt 12 eine zumindest teilweise verringerte Wandstärke besitzt. Hier konkret weisen die beiden einander gegenüberliegenden Schenkel 4, 5 jeweils einander gegenüberliegende Abschnitte 11 auf, die gegenüber benachbarten Abschnitten 12 zumindest teilweise eine verringerte Wandstärke aufweisen.

Beim Ausführungsbeispiel nach der **Figuren-Folge 1** ist der Abschnitt 11 mit der teilweise verringerten Wandstärke dadurch gekennzeichnet, dass sich eine Aussparung 21 in den Schenkeln 4, 5 im Bereich dieses Abschnitts 11 an deren freien Enden befindet, d.h. dass die Schenkel 4, 5 im Bereich dieses Abschnittes 11 kürzer sind als die Schenkel 4, 5 der beiden dem Abschnitt 11 direkt benachbarten Abschnitte 12.

Wenn nun auf den Lenkrad-Kranz 3 des Lenkrad-Skeletts eine unnormal hohe Kraft F einwirkt, so wie dies bei einem Crash oder Unfall eines Fahrzeugs mit einem erfindungsgemäßen Lenkrad der Fall sein kann (nämlich dann wenn der Körper des Fzg.-Fahrers mit dem Lenkrad in Kontakt kommt), so ist klar ersichtlich, dass aufgrund des hinsichtlich der Steifigkeit gegenüber den Abschnitten 12 geschwächten Abschnittes 11 der Speiche 2 das Lenkrad-Skelett leichter verformt werden kann und somit nachgiebiger ist, als wenn der Abschnitt 11 keine verkürzten Schenkel 4, 5 (bzw. allgemein keine zumindest teilweise verringerte Wandstärke) aufweisen würde. Die sich bei einer derartigen intensiven Krafteinwirkung einstellende Verformung ist dabei in **Fig.1C** dargestellt, wobei der Pfeil X auf den unbelasteten Profil-Querschnitt hinweist, während der Pfeil Y den Profil-Querschnitt nach der Belastung durch die Kraft F bezeichnet.

Für den Fachmann klar erkennbar ist, dass die stärkste Verformung der Schenkel 4, 5 unter Einwirkung einer intensiven Kraft F dabei in den an den Abschnitt 11 angrenzenden Randbereichen der Abschnitte 12 erfolgt. Hingegen tritt in den sich an diese Randbereiche anschließenden Zentren der Abschnitte 12 sowie im der Nabe 1 bzw. dem Kranz 3 zugewandten Randbereich der Abschnitte 12 praktisch keine Verformung durch die Kraft F auf, da diese letztgenannten Bereiche relativ steif gestaltet sind, d.h. eine wesentlich höhere Steifigkeit aufweisen als der Abschnitt 11. Der Vorteil, der sich aus dem Vorhandensein derartiger Bereiche mit relativ hoher Steifigkeit ergibt, liegt im günstigeren Schwingungsverhalten des Lenkrads, wie weiter oben (vor der Bezugnahme auf die Figurendarstellungen) ausführlich erläutert wurde.

Beim Ausführungsbeispiel nach der **Figuren-Folge 2** sind abwechselnd hintereinander angeordnet Abschnitte 11 mit (gegenüber den Schenkeln 4, 5 in Abschnitten 12) verringerter Wandstärke d* der Schenkel 4, 5 und Abschnitte 12 mit (gegenüber den Schenkeln 4, 5 in Abschnitten 11) größerer Wandstärke d der Schenkel 4, 5 vorgesehen, wie insbesondere aus den **Figuren 2A, 2B, 2C** hervorgeht. Dabei zeigt **Fig.2C,** dass auch der sog.

Basis-Schenkel 6 in einem Querschnitt bzw. im Abschnitt 11, in dem die seitlichen Schenkel 4, 5 eine zumindest teilweise verringerte Wandstärke aufweisen, eine gegenüber einem benachbarten Querschnitt oder Abschnitt 12 zumindest teilweise verringerte Wandstärke s* aufweist bzw. aufweisen kann. In einer alternativen Ausführungsform, die in **Fig.2D** dargestellt ist, ist hingegen die Wandstärke s des Basis-Schenkels 6 im Abschnitt 11 gleich derjenigen im Abschnitt 12.

In den Abschnitten 11, die in den **Figuren 2C** bzw. **2D** im Schnitt dargestellt sind, ist somit das Profil bzw. der Profil-Querschnitt gegenüber den hierzu benachbarten Abschnitten 12, die in **Fig.2B** im Schnitt dargestellt sind, geschwächt, und zwar im Hinblick auf den gewünschten und bereits erläuterten Effekt, nämlich ein Lenkrad-Skelett zu schaffen, das einerseits hohe Steifigkeit besitzt, um ein günstiges Schwingungsverhalten des Lenkrads zu erzielen, und andererseits bei Überlast leicht und reproduzierbar deformiert.

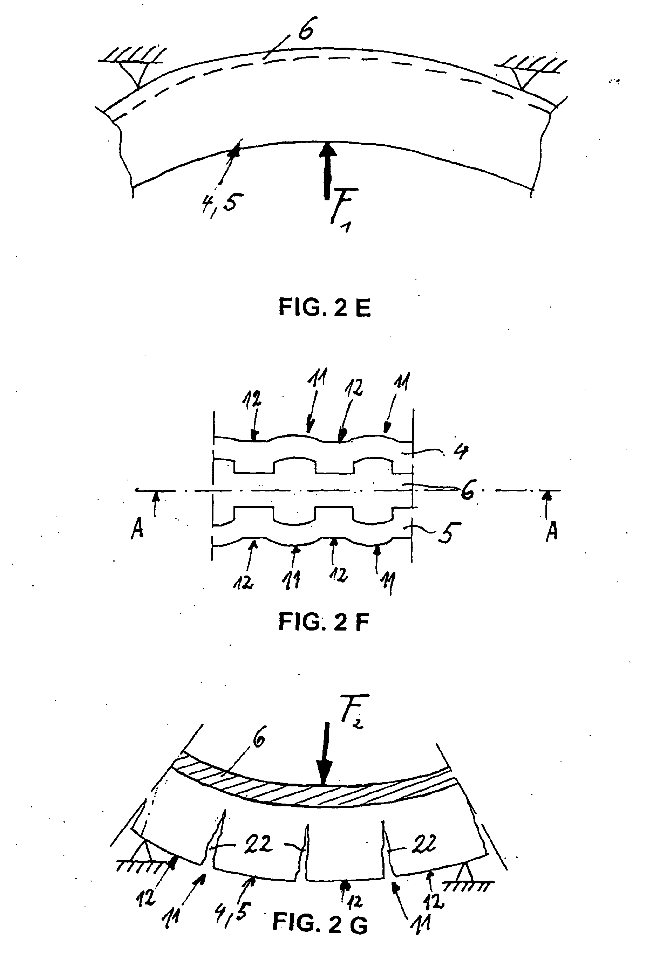

Während in den **Figuren 2A - 2D** das Lenkrad-Skelett gemäß dem Ausführungsbeispiel nach der **Figurenfolge 2** im nicht durch eine extreme Kraft belasteten Zustand dargestellt ist, zeigen die **Figuren 2E - 2G** die Verhältnisse bei extremer Belastung mit einer Kraft F₁ bzw. F₂, und zwar in übertriebener Darstellung. So werden bei einer Belastung durch die Kraft F₁ (vgl. **Fig.2E**) in den "geschwächten" Abschnitten 11 die in ihrer Wandstärke d* gegenüber den Abschnitten 12 verringerten Schenkel 4, 5 nach außen - d.h. von der Symmetrielinie des im Querschnitt U-förmigen Profils weg - ausgebeult, so wie dies in **Fig.2F** gezeigt ist. Bei einer entgegengerichteten Belastung, die in **Fig.2G** dargestellt ist, werden zumindest einige der gegenüber den Abschnitten 12 geschwächte Abschnitte 11 einreißen oder aufreißen, wobei diese Risse mit der Bezugsziffer 22 bezeichnet sind.

In diesem Zusammenhang sei nochmals auf **Fig.2F** Bezug genommen, die nämlich eine weitere Ausführungsform der vorliegenden Erfindung auch im unbelasteten Zustand darstellen kann. Bei dieser weiteren Ausführungsform sind die Schenkel 4, 5 im Abschnitt 11 mit zumindest teilweise verringerter Wandstärke d* gegenüber den benachbarten Abschnitten 12 (mit der dortigen größeren Wandstärke d) nach außen gewölbt - d.h. voneinander weg -, und zwar bereits von Anfang an, d.h. noch ehe eine Deformation eingetreten ist. Mit einer derartigen oder einer entgegengerichteten Formgebung, bei welcher die Schenkel 4, 5, in den Abschnitten 11 nach innen - d.h. zueinander hin - gewölbt sind, wird bereits eine definierte Ausbeul-Richtung für einen extremen Belastungsfall, aufgrund dessen sich eine Deformation einstellt, vorgegeben.

Eine weitere Ausführungsform der vorliegenden Erfindung ist in der **Figurenfolge 3** dargestellt. Wie (zunächst) aus den **Figuren 3A, 3B** hervorgeht, ist im Abschnitt 11 die sog. teilweise verringerte Wandstärke eines Schenkels 4 bzw. 5 - ähnlich wie bei der Figurenfolge 1 - in Form einer sich am freien Ende jedes Schenkels befindenden Aussparung 21 ausgebildet, die hier die Form eines sich zum Basis-Schenkel 6 hin verjüngenden Dreiecks besitzt. Diese Aussparung 21 fungiert als Sollbruchstelle im Abschnitt 11, so dass bei einer entsprechenden Belastung durch eine unüblich hohe Kraft F - wie in **Fig.3D** dargestellt - von dieser Aussparung 21 ein (dann gewünschter) Riss 22 ausgeht.

**Figur 3D** zeigt weiterhin die Wirkung eines zwischen der Aussparung 21 und dem Basis-Schenkel 6 in jedem Schenkel 4 bzw. 5 vorgesehenen und dabei als sog. Riss-Stopper wirkenden Durchbruchs 23. Ein von der Aussparung 21 unter entsprechender Einwirkung einer Kraft F ausgehender Riss 22 wird auf kürzestem Wege zumeist nur bis zu diesem Durchbruch 23 verlaufen und dort zunächst gestoppt bzw. angehalten werden. Mit einer geeigneten Anordnung bzw. Gestaltung derartiger als Riss-Stopper wirkender Durchbrüche 23 kann somit die Deformation des Lenkrads bzw. Lenkrad-Skeletts (ausgelöst von einem Aufprall) wie gewünscht gesteuert werden. Dabei kann ein solcher Durchbruch 23, der im übrigen selbst eine erfindungsgemäße "teilweise verringerte Wandstärke" im jeweiligen Schenkel 4 bzw. 5 bildet, wie in **Fig.3A** dargestellt als Bohrung bzw. Rundloch ausgebildet sein, daneben jedoch auch als Langloch, so wie dies in den **Figuren 3C, 3D** dargestellt ist.

Zusammenfassend kann mit der vorliegenden Erfindung der bestehende Zielkonflikt zwischen den konträren Anforderungen, einerseits ein relativ steifes Lenkrad zu haben, um - insbesondere bei Leichtmetall-Skeletten mit hohen Massenträgheitsmomenten - die Eigenfrequenzziele und damit einen guten Schwingungskomfort im Fahrzeug zu erreichen, und andererseits ein relativ gut verformbares Lenkrad zu haben, um die Belastungswerte für den Fzg.-Insassen bzw. Fahrer im Falle eines Fzg.-Crashs möglichst gering zu halten, aufgelöst werden, wobei noch darauf hingewiesen sei, dass durchaus eine Vielzahl von Details insbesondere konstruktiver Art abweichend von den gezeigten Ausführungsbeispielen gestaltet sein kann, ohne den Inhalt der Patentansprüche zu verlassen.

## Patentansprüche

1. Lenkrad-Skelett eines Fahrzeug-Lenkrads mit einer Nabe (1), zumindest einer davon abgehenden Speiche (2) sowie einem Lenkrad-Kranz (3), wobei die Speiche(n) (2) und/oder der Kranz (3) einen durch seitliche Schenkel (4, 5) sowie einen Basis-Schenkel (6) gebildeten, im wesentlichen U-förmigen Querschnitt besitzt/besitzen und wobei über der Länge der Speiche (2) oder dem Umfang des Kranzes (3) betrachtet Bereiche (12) vorgesehen sind, die sich durch relativ hohe Steifigkeit auszeichnen, während diesen Bereichen (12) benachbart zumindest ein Abschnitt (11) vorgesehen ist, der gegenüber den Bereichen (12) mit hoher Steifigkeit leichter deformierbar ist und hierfür eine teilweise verringerte Wandstärke in Form einer Aussparung (21) oder eines Durchbruchs (23) aufweist,
**dadurch gekennzeichnet, dass** sich die Aussparung (21) am freien Ende eines Schenkels (4, 5) befindet und als Sollbruchstelle fungiert, und dass im Schenkel (4, 5) zwischen dieser Aussparung (21) und dem Basis-Schenkel (6) ein Riss-Stopper in Form eines Durchbruchs (23) oder dgl. vorgesehen ist.

2. Lenkrad-Skelett nach Anspruch 1,
**dadurch gekennzeichnet, dass** die beiden einander gegenüberliegenden Schenkel (4, 5) jeweils einander gegenüberliegende Abschnitte (11) mit jeweils einer gegenüber benachbarten Abschnitten (12) zumindest teilweise verringerten Wandstärke aufweisen.

3. Lenkrad-Skelett nach Anspruch 1 oder 2
**dadurch gekennzeichnet, dass** der Basis-Schenkel (6) in einem Querschnitt, in dem der oder die seitlichen Schenkel (4, 5) eine zumindest teilweise verringerte Wandstärke (d*) aufweist oder aufweisen, ebenfalls eine gegenüber einem benachbarten Querschnitt oder Abschnitt (12) zumindest teilweise verringerte Wandstärke (s*) aufweist.

4. Lenkrad-Skelett nach einem der vorangegangenen Ansprüche,
**dadurch gekennzeichnet, dass** in der Speiche und/oder im Lenkrad-Kranz (3) mehrere Abschnitte (12) mit zumindest teilweise verringerter Wandstärke vorgesehen sind.

5. Lenkrad-Skelett nach einem der vorangegangenen Ansprüche,
**dadurch gekennzeichnet, dass** bei einer Speiche (2) der oder die Abschnitt(e) (11) mit zumindest teilweise verringerter Wandstärke näher an der Nabe (1) als am Kranz (3) vorgesehen sind.

6. Lenkrad-Skelett nach einem der vorangegangenen Ansprüche,
**dadurch gekennzeichnet, dass** der oder die Schenkel (4, 5) in einem Abschnitt (11) mit zumindest teilweise verringerter Wandstärke gegenüber den benachbarten Abschnitten (12) nach außen oder innen gewölbt sind.

## Claims

1. A skeleton or frame of a vehicle steering wheel comprising a hub (1), at least one spoke (2) extending therefrom and a steering-wheel rim (3), wherein the spoke or spokes (2) and/or the rim (3) have a substantially U-shaped cross-section formed by side limbs (4, 5) and a base limb (6) and wherein regions (12) of relatively high rigidity are provided along the rib (2) or the periphery of the rim (3) whereas at least one portion (11) adjoining the regions (12) is more easily deformable than the stiffer regions (12) and accordingly has a partial reduction in wall strength in the form of a recess (21) or an aperture (23), **characterised in that** the recess (21) is at the free end of a limb (4, 5) and acts as a set breaking place, and a crack stopper in the form of an aperture (23) or the like is provided in the limb (4, 5) between the recess (21) and the base limb (6).

2. A steering wheel frame according to claim 1, **characterised in that** the two opposite limbs (4, 5) have corresponding facing portions (11) with an at least partially reduced wall strength compared with neighbouring portions (12).

3. A steering wheel frame according to claim 1 or 2, **characterised in that** in a cross-section in which the side limb or limbs (4, 5) have an at least partly reduced wall strength (d*), the base limb (6) likewise has an at least partly reduced wall strength (s*) compared with a neighbouring cross-section or portion (12).

4. A steering wheel frame according to any of the preceding claims, **characterised in that** a number of portions (12) with at least partly reduced wall strength are provided in the spoke and/or in the steering-wheel rim (3).

5. A steering wheel frame according to any of the preceding claims, **characterised in that** in the case of a spoke (2), the portion or portions (11) with at least partly reduced wall strength are nearer to the hub (1) than to the rim (3).

6. A steering wheel frame according to any of the preceding claims, **characterised in that**, in a portion (11) with at least partly reduced wall strength compared with the neighbouring portions (12), the limb or limbs (4, 5) are bent outwards or inwards.

## Revendications

1. Armature de volant d'un véhicule comportant un moyeu (1), au moins un rayon (2) partant de celui-ci ainsi qu'une couronne de volant (3) dans laquelle le(s) rayon(s) (2) et/ou la couronne (3) ont une section essentiellement en forme de U formée par des bras latéraux (4, 5) ainsi que par un bras de base (6), et avec sur la longueur du rayon ou à la périphérie de la couronne (3), des zones (12) qui se caractérisent par une rigidité relativement importante et au voisinage de ces zones, au moins un tronçon (11) plus facilement déformable que les zones (12) ayant une rigidité importante, avec à cet effet une épaisseur de paroi en partie réduite en forme d'évidement (21) ou d'ajour (23),
**caractérisée en ce que**
l'évidement (21) se trouve sur l'extrémité libre d'un bras (4, 5) et fait office de point de rupture théorique et on prévoit, dans le bras (4, 5), entre cet évidement (21) et le bras de base (6), un stoppeur de fissure en forme d'ajour (23) ou autres.

2. Armature de volant selon la revendication 1,
**caractérisée en ce que**
les deux bras (4, 5) se faisant face, présentent chacun des tronçons (11) se faisant face ayant une épaisseur de paroi au moins partiellement réduite par rapport à des tronçons (12) voisins.

3. Armature selon la revendication 1 ou 2,
**caractérisée en ce que**
le bras de base (6) présente également, dans une section dans laquelle le ou les bras latéraux (4, 5) présentent une épaisseur de paroi (d*) au moins partiellement réduite, une épaisseur de paroi (s*) au moins partiellement réduite par rapport à une section voisine ou à un tronçon voisin (12).

4. Armature selon l'une quelconque des revendications précédentes,
**caractérisée par**
plusieurs tronçons (12) ayant une épaisseur de paroi au moins partiellement réduite, dans le rayon et/ou dans la couronne de volant (3).

5. Armature selon l'une quelconque des revendications précédentes,
**caractérisée en ce que**
pour un rayon unique (2), le ou les tronçons (11) ont une épaisseur de paroi au moins partiellement réduite plus proche du moyeu (1) que de la couronne (3).

6. Armature de volant selon l'une quelconque des revendications précédentes,
**caractérisée en ce que**
le ou les bras (4, 5) dans un tronçon (11) ayant une épaisseur de paroi au moins partiellement réduite par rapport aux tronçons (12) voisins sont recourbés vers l'extérieur ou vers l'intérieur.
